# EUROPÄISCHE PATENTSCHRIFT

(11) **EP 2 943 946 B1**
(45) Veröffentlichungstag und Bekanntmachung des Hinweises auf die Patenterteilung: **19.06.2019**
(21) Anmeldenummer: 14701155.5
(22) Anmeldetag: 13.01.2014
(51) Int. Cl.: G08C 17/02, H04Q 9/00

(54) **KOMMUNIKATIONSMODUL**
COMMUNICATIONS MODULE
MODULE DE COMMUNICATION

(30) Priorität: 14.01.2013 DE 102013200373
(43) Veröffentlichungstag der Anmeldung: 18.11.2015
(73) Patentinhaber: BSH Hausgeräte GmbH, 81739 München (DE)
(72) Erfinder: GAUGLER, Johannes, 93073 Neutraubling (DE); KOLBE, Andreas, 12683 Berlin (DE); LEITL-NOBEL, Martin, 86465 Welden (DE); SIPPEL, Matthias, 83329 Waging am See (DE)
(86) Internationale Anmeldenummer: PCT/EP2014/050427
(87) Internationale Veröffentlichungsnummer: WO 2014/108522

(56) Entgegenhaltungen:
- EP-A1- 0 742 308
- EP-A1- 1 956 572
- WO-A1-2008/119640
- WO-A2-2008/018102
- DE-A1-102008 027 597
- DE-A1-102009 003 134
- DE-B3-102012 101 536
- US-A1- 2003 189 509

## Beschreibung

Die vorliegende Erfindung betrifft ein Kommunikationsmodul für ein Haushaltsgerät, einen Kommunikationspartner für ein Haushaltsgerät, ein Haushaltsgerät mit einem Kommunikationsmodul, eine Haushaltsgeräteanordnung und ein Verfahren zum Bedienen eines Haushaltsgerätes.

Die Entwicklung neuartiger Displaytechnologien und Speicher erfolgt in sehr kurzen Zyklen, die nicht vergleichbar mit der normalen Nutzungsdauer von Haushaltsgeräten von ca. 10 Jahren ist. Ein Austausch von elektronischen Anzeigeeinrichtungen am Haushaltsgerät oder die Bereitstellung von neuen Funktionen ist daher nur schwer möglich.

Die Druckschrift EP 09 53 167 B1 beschreibt ein Steuersystem für ein Gerät, das Haushaltsgegenstände wie Nahrungsmittel, Wäsche oder Geschirr behandelt, und das über einen Bus von einem Computer oder mittels einer Fernbedienung gesteuert wird. Die tastenbasierte Steuerung des Gerätes über die Tastatur des Computers oder die Tasten der Fernbedienung ist umständlich und unflexibel. Aus der EP 1 956 572 A1 ist ein fernsteuerbares Hausgerät vorbekannt, das einen Verweis auf einen externen Speicherort eines für ihn geeigneten Kontrollprogramms an ein Kommunikationsgerät versendet.

Es ist die der Erfindung zugrundeliegende Aufgabe, ein Haushaltsgerät mit vereinfachter und flexibler Bedienung anzugeben. Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein Haushaltsgerät mit einem Kommunikationsmodul für ein Haushaltsgerät gelöst, bei dem das Kommunikationsmodul eine Sendeeinrichtung zum drahtlosen Senden von Haushaltsgeräteinformation an einen Kommunikationspartner mit einer berührungsempfindlichen Anzeige umfasst. Dadurch wird beispielsweise der technische Vorteil erreicht, dass durch einen Einsatz eines Kommunikationsmoduls, das eine Kommunikation zwischen dem Haushaltsgerät und einem externen Kommunikationspartner herstellt, auf eine Anzeigeeinrichtung am Haushaltsgerät verzichtet werden kann.

Unter einem Haushaltsgerät wird ein Gerät verstanden, das zur Haushaltsführung eingesetzt wird. Das kann ein Haushaltsgroßgerät sein, wie beispielsweise eine Waschmaschine, ein Wäschetrockner, eine Geschirrspülmaschine, ein Gargerät, eine Dunstabzugshaube oder ein Kältegerät, wie z.B. ein Kühlschrank, ein Gefrierschrank oder eine Kühlgefrierkombination. Das kann aber auch ein Haushaltskleingerät sein, wie beispielsweise ein Warmwasserbereiter, ein Kaffeevollautomat, eine Küchenmaschine oder ein Staubsauger. Eine berührungsempfindliche Anzeige, auch Touchscreen, Tastschirm, Berührungsbildschirm oder Sensorbildschirm genannt, ist ein kombiniertes Ein- und Ausgabegerät, bei dem durch Berührung von Teilen eines Bildes der Programmablauf des Kommunikationspartner direkt gesteuert werden kann. Eine technische Umsetzung der Befehlseingabe ist für den Benutzer unsichtbar und erzeugt den Eindruck einer unmittelbaren Steuerung des Kommunikationspartners per Fingerzeig. Das Bild, welches durch das darauf oder darunter befindliche Touchpad berührungsempfindlich gemacht wird, kann beispielsweise durch eine Matrixanzeige erzeugt werden.

In einer vorteilhaften Ausführungsform des Haushaltsgeräts umfasst das Kommunikationsmodul eine Empfangseinrichtung zum drahtlosen Empfangen von über eine berührungsempfindliche Anzeige eingegebener Bedieninformation von dem Kommunikationspartner. Dadurch wird beispielsweise der technische Vorteil erreicht, dass eine Bedienung des Haushaltgerätes anhand des Kommunikationspartners vorgenommen werden kann und eine Bedieneinheit am Haushaltsgerät verzichtet werden kann.

In einer weiteren vorteilhaften Ausführungsform des Haushaltsgeräts ist das Kommunikationsmodul ausgebildet, Steuerbefehle für die berührungsempfindliche Anzeige des Kommunikationspartners zu senden. Dadurch wird beispielsweise der technische Vorteil erreicht, dass das Haushaltgerät die berührungsempfindliche Anzeige an die von dem Haushaltsgerät bereitgestellten Funktionen anpassen kann.

In einer weiteren vorteilhaften Ausführungsform des Haushaltsgeräts ist das Kommunikationsmodul ausgebildet, auf Anfrage eine Identifikationsinformation des Haushaltsgeräts an den Kommunikationspartner zu senden. Dadurch wird beispielsweise der technische Vorteil erreicht, dass das Haushaltsgerät von dem externen Kommunikationspartner identifiziert werden kann und eine Anpassung des Kommunikationspartners und der berührungsempfindlichen Anzeige in Abhängigkeit der Identifikationsinformation vorgenommen werden kann.

In einer vorteilhaften Ausführungsform des Haushaltsgerätes umfasst das Haushaltsgerät eine Einzeltaste zum manuellen Bedienen des Haushaltsgerätes. Dadurch wird beispielsweise der technische Vorteil erreicht, dass sich der Aufwand bei der Herstellung des Haushaltsgerätes verringert, auf den Einbau einer Anzeigeeinrichtung verzichtet werden kann.

Gemäß einem zweiten Aspekt der Erfindung wird die Aufgabe durch einen Kommunikationspartner zum drahtlosen Bedienen eines Haushaltsgerätes gelöst, bei dem der Kommunikationspartner eine berührungsempfindliche Anzeige umfasst. Dadurch wird beispielsweise der technische Vorteil erreicht, dass sich die Bedienung gegenüber einer tastenbasierten Bedienung vereinfacht.

In einer vorteilhaften Ausführungsform des Kommunikationspartners ist der Kommunikationspartner ausgebildet, eine Identifikationsinformation von dem Haushaltsgerät abzurufen. Dadurch wird beispielsweise ebenfalls der technische Vorteil erreicht, dass das Haushaltsgerät von dem Kommunikationspartner identifiziert werden kann und eine Anpassung des Kommunikationspartners und der berührungsempfindlichen Anzeige in Abhängigkeit der abgerufenen Identifikationsinformation vorgenommen werden kann.

In einer weiteren vorteilhaften Ausführungsform des Kommunikationspartners ist der Kommunikationspartner ausgebildet, eine Bedien- und Anzeigefunktion der berührungsempfindlichen Anzeige in Abhängigkeit der empfangenen Identifikationsinformation bereitzustellen. Dadurch wird beispielsweise der technische Vorteil erreicht, dass eine Anpassung des Kommunikationspartners und der berührungsempfindlichen Anzeige in Abhängigkeit der Identifikationsinformation vorgenommen werden kann.

In einer weiteren vorteilhaften Ausführungsform des Kommunikationspartners ist der Kommunikationspartner ausgebildet, eine Bedien- und Anzeigefunktion der berührungsempfindlichen Anzeige in Abhängigkeit der empfangenen Identifikationsinformation von einer externen Quelle abzurufen. Dadurch wird beispielsweise der technische Vorteil erreicht, dass der Kommunikationspartner auf einfache Weise neue und aktuelle Funktionen abrufen kann.

In einer weiteren vorteilhaften Ausführungsform des Kommunikationspartners umfasst der Kommunikationspartner eine Softwarebedieneinrichtung zum Bedienen des Haushaltgeräts über den Kommunikationspartner. Die Softwarebedieneinrichtung kann derart ausgestaltet sein, dass mit dieser unterschiedliche Haushaltgeräte bedient werden können. Dadurch wird beispielsweise der technische Vorteil erreicht, dass eine Anpassung des externen Kommunikationspartners an unterschiedliche Haushaltsgeräte auf einfache Weise durchgeführt werden kann.

In einer weiteren vorteilhaften Ausführungsform des Kommunikationspartners ist der Kommunikationspartner ein Tablet-PC oder ein Smartphone. Dadurch wird beispielsweise der technische Vorteil erreicht, dass bereits vorhandene Geräte als Kommunikationspartner für das Haushaltsgerät verwendet werden können.

Gemäß einem dritten Aspekt der Erfindung wird die Aufgabe durch ein Verfahren zum Bedienen eines Haushaltsgerätes gelöst, das den Schritt eines Eingebens von Bedieninformation in einen Kommunikationspartner mit einer berührungsempfindlichen Anzeige und den Schritt eines drahtlosen Sendens der Bedieninformation an das Haushaltsgerät umfasst. Dadurch wird beispielsweise ebenfalls der technische Vorteil erreicht, dass sich eine Bedienung des Haushaltsgerätes vereinfacht.

In einer vorteilhaften Ausführungsform umfasst das Verfahren den Schritt eines Abrufens einer Bedien- und Anzeigefunktion der berührungsempfindlichen Anzeige in Abhängigkeit einer von dem Haushaltsgerät empfangenen Identifikationsinformation. Dadurch wird beispielsweise der technische Vorteil erreicht, dass eine Bedien- und Anzeigefunktion aktualisiert und angepasst werden kann.

Ausführungsbeispiele der Erfindung sind in der Zeichnung dargestellt und werden im Folgenden näher beschrieben.

Es zeigt:

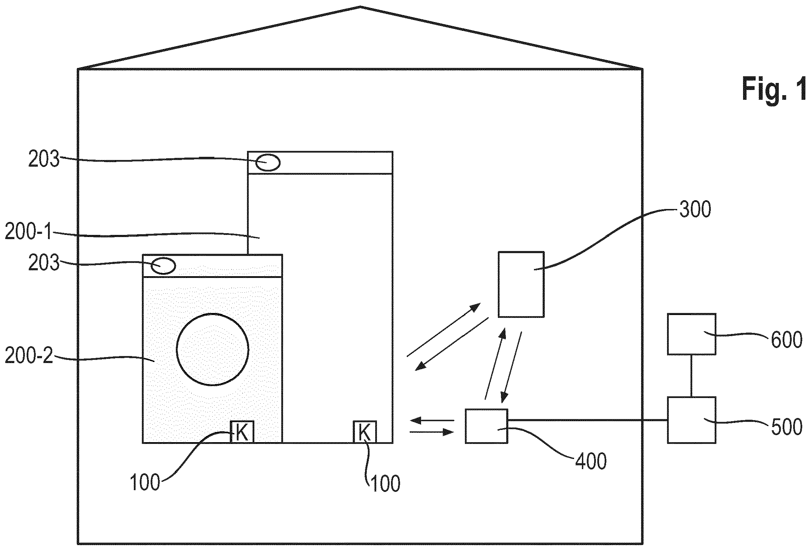

Fig. 1 eine schematische Ansicht einer Haushaltsgeräteanordnung.

Fig. 1 zeigt eine schematische Ansicht einer Haushaltsgeräteanordnung für Haushaltgeräte 200-1 und 200-2 mit einem Kommunikationsmodul 100. Moderne Haushaltsgeräte 200-1 und 200-2 besitzen eine Vielzahl von Funktionen.

Die Haushaltsgeräte 200-1 und 200-2 sind mit dem Kommunikationsmodul 100 ausgestattet. Das Kommunikationsmodul 100 verbindet das Haushaltsgerät 200-1 oder 200-1 mit einem externen Kommunikationspartner 300, der eine berührungsempfindliche Anzeige umfasst, wie beispielsweise einem Smart Phone oder einem Tablet-PC. Die Verbindung erfolgt entweder direkt über einen Router 400 oder über ein Home Energy Management System.

Ein Benutzer kann sich über den externen Kommunikationspartner 300 die Haushaltsgerätedaten der Haushaltsgeräte 200-1 und 200-2 anzeigen lassen und durch das Senden von Bedieninformation alle Funktionen der verbundenen Haushaltsgeräte 200-1 und 200-2 fernsteuern. Eine Bedien- und Anzeigeeinheit am Haushaltsgerät 200-1 oder 200-2 kann vollständig durch eine Kombination des Kommunikationsmoduls 100 und eine Anwendung auf dem externen Kommunikationspartner 300 ersetzt sein, mit dem das Kommunikationsmodul 100 kommuniziert.

Lediglich sicherheitsrelevante Funktionen, wie beispielsweise ein Ein-/Aus-Schalter, werden am Haushaltsgerät 200-1 und 200-2 selbst bedient. Alle weiteren Funktionen lassen sich über den Kommunikationspartner 300 steuern. Im Auslieferungszustand besitzen die Haushaltsgeräte 200-1 und 200-2 eine Standardeinstellung, mit der diese auch ohne Zuhilfenahme des externen Kommunikationspartners 300 eingeschränkt verwendet werden können.

Die Bedienung am Haushaltsgerät 200-1 und 200-2 reduziert sich auf eine einzige Einzeltaste, die auch zur sicheren Anmeldung des externen Kommunikationspartners 300 an dem Haushaltsgerät 200-1 und 200-2 dienen kann.

Die Verbindung zwischen dem externen Kommunikationspartner 300 und dem Haushaltsgerät 200-1 und 200-1 kann beispielsweise über Wi-Fi Protected Setup (WPS) erfolgen. Vorteilhaft ist in diesem Zusammenhang eine Konfiguration auf Knopfdruck (Push Button Configuration - PBC).

Ein Zugangspunkt (Access Point) und die zu verbindenden Haushaltsgeräte 200-1 und 200-2 besitzen einen physischen oder per Software implementierten Knopf zur Verbindungsherstellung. Wird dieser gedrückt, beginnt eine zweiminütige Phase, in welcher die Haushaltsgeräte 200-1 und 200-2 einem Netzwerk hinzugefügt werden können.

Beim Erwerb des Haushaltsgerätes 200-1 und 200-2 erhält der Kunde gleichzeitig eine Software oder einen Link zum Download einer Software, die er auf seinem Kommunikationspartner 300 installieren kann, beispielsweise einem Tablet-PC oder einem Smartphone. Mit Hilfe dieser Software kann der Kunde nun eine Verbindung zum Haushaltsgerät 200-1 und 200-2 herstellen.

Beim Zugriff auf das Haushaltsgerät 200-1 und 200-2 übermittelt dieses eine eindeutige Identifikationsinformation, anhand der erkannt werden kann, um welches Haushaltsgerät es sich handelt. Die Identifikationsinformation kann beispielsweise eine MAC-Adresse oder eine Seriennummer des Haushaltsgerätes 200-1 oder 200-2 sein. Je nach Identifikationsinformation können die entsprechenden Funktionen auf dem Kommunikationspartner 300 dargestellt werden. Falls beispielsweise das Haushaltsgerät 200-1 als ein bestimmtes Kältegerät identifiziert wird, werden andere Funktionen angezeigt als wenn das Haushaltsgerät 200-2 als ein bestimmter Wäschetrockner identifiziert wird. Im Allgemeinen ist es dadurch auch möglich, mehrere unterschiedliche Haushaltsgeräte 200-1 und 200-2 mit ein und demselben Kommunikationspartner 300 zu bedienen.

Eine externe Datenbank 600, in der die Identifikationsinformation den Funktionen der Haushaltsgeräte 200-1 und 200-2 und einer zugehörigen Anwendungssoftware zugeordnet sind, stellt dem Haushaltsgerät die entsprechenden Funktionen bereit. Nach einem Herunterladen der entsprechenden Anwendungssoftware über das Internet 500 kann die Bedienung des Haushaltsgerätes 200-1, 200-2 vollständig über diese Anwendungssoftware stattfinden. Die Bedieninformation wird von dem Kommunikationspartner 300 über das Kommunikationsmodul 100 an die Steuerung des Haushaltsgerätes 200-1, 200-2 übertragen. In diesem Fall kann das Haushaltsgerät 200-1, 200-2 derart gestaltet sein, dass nur noch sicherheitsrelevante Funktionen am Haushaltsgerät 200-1 und 200-2 selbst realisiert sind.

Durch einen Verzicht auf eine Anzeige-Bedieneinheit an dem Haushaltgerät 200-1 und 200-2 und die Reduktion der Bedienung am Haushaltsgerät 200-1, 200-2 auf eine Einzeltaste oder einen Schalter 203 zur Anmeldung des Kommunikationsmoduls 100 an den Kommunikationspartner 300 wird eine deutliche Vereinfachung bei der Handhabung des Haushaltsgerätes 200-1, 200-2 erreicht.

In diesem Fall ist es nicht notwendig, an allen Haushaltsgeräten 200-1 und 200-2 ähnliche Anzeige-Bedieneinheiten vorzusehen, da diese vollständig durch den externen Kommunikationspartner 300 ersetzt werden können. Hierdurch erzielt man über die Gesamtheit der Haushaltsgeräte 200-1 und 200-2 eine deutliche Verringerung des technischen Aufwands bei der Herstellung.

Zur Bedienung der Haushaltsgeräte 200-1 und 200-2 und zur Anzeige eines Betriebsstatus können bereits im Haushalt vorhandene Kommunikationspartner 300, wie Smartphones oder Tablet-PCs verwendet werden. An dem Kommunikationspartner 300 mit einer berührungsempfindlichen Anzeige können komplexe Funktionen einfach veranschaulicht, die Bedienung vereinfacht und neue Informationen angezeigt werden, beispielsweise Kochrezepte.

Zusätzlich ist eine Fehlerdiagnose über das Kommunikationsmodul 100 möglich. Eine Bedien- und Anzeigeeinrichtung am Haushaltsgerät 200-1 und 200-2 kann entfallen und ist einfach über eine Anwendung (App) auf Softwarebasis am Kommunikationspartner 300 realisierbar. Eine Differenzierung der Haushaltsgeräte 200-1 und 200-2 kann über diese Software erfolgen.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Kommunikationsmodul
- 200-1: Haushaltegerät
- 200-2: Haushaltsgerät
- 300: Kommunikationspartner
- 400: Router
- 500: Internet
- 600: Datenbank

## Patentansprüche

1. Haushaltsgerät (200-1, 200-2) mit einem Kommunikationsmodul (100) für ein Haushaltsgerät (200-1, 200-2), wobei das Kommunikationsmodul (100) eine Sendeeinrichtung zum drahtlosen Senden von Haushaltsgeräteinformation an einen Kommunikationspartner (300) mit einer berührungsempfindlichen Anzeige umfasst, wobei das Kommunikationsmodul (100) ausgebildet ist, auf Anfrage eine Identifikationsinformation des Haushaltsgeräts (200-1, 200-2) in Form einer Seriennummer des Haushaltsgeräts (200-1, 200-2) an den Kommunikationspartner (300) zu senden,
**dadurch gekennzeichnet, dass**
das Haushaltsgerät (200-1, 200-2) eine Einzeltaste (203) zum manuellen Bedienen des Haushaltsgerätes (200-1, 200-2) und im Auslieferungszustand eine Standardeinstellung besitzt, mit der das Haushaltsgerät ohne Kommunikationspartner (300) eingeschränkt verwendet werden kann,
wobei eine Verbindung zwischen dem Haushaltsgerät und dem Kommunikationspartner (300) mit Hilfe von Wi-Fi Protected Setup und unter Verwendung der Einzeltaste mittels Push Button Configuration erfolgt.

2. Haushaltsgerät (200-1, 200-2) nach Anspruch 1, **dadurch gekennzeichnet, dass** das Kommunikationsmodul (100) eine Empfangseinrichtung zum drahtlosen Empfangen von über eine berührungsempfindliche Anzeige eingegebener Bedieninformation von dem Kommunikationspartner (300) umfasst.

3. Haushaltsgerät (200-1, 200-2) nach einem der vorangehenden Ansprüche, **dadurch gekennzeichnet, dass** das Kommunikationsmodul (100) ausgebildet ist, Steuerbefehle für die berührungsempfindliche Anzeige des Kommunikationspartners (300) zu senden.

4. Kommunikationspartner (300) zum drahtlosen Bedienen eines Haushaltsgerätes (200-1, 200-2) nach einem der vorangehenden Ansprüche, **dadurch gekennzeichnet, dass** der Kommunikationspartner (300) eine berührungsempfindliche Anzeige umfasst und dafür ausgebildet ist, eine Verbindung mit dem Haushaltsgerät mit Hilfe von Wi-Fi Protected Setup und Push Button Configuration herzustellen sowie eine Identifikationsinformation von dem Haushaltsgerät (200-1, 200-2) in Form einer Seriennummer des Haushaltsgeräts (200-1, 200-2) abzurufen und in Abhängigkeit der empfangenen Identifikationsinformation eine Bedien- und Anzeigefunktion der berührungsempfindlichen Anzeige von einer externen Quelle abzurufen und bereitzustellen, so dass der Kommunikationspartner (300) mehrere unterschiedliche Haushaltsgeräte bedienen kann.

5. Kommunikationspartner (300) nach Anspruch 4, **dadurch gekennzeichnet, dass** der Kommunikationspartner (300) eine Softwarebedieneinrichtung zum Bedienen des Haushaltgeräts über den Kommunikationspartner (300) umfasst.

6. Kommunikationspartner (300) nach einem der Ansprüche 4 bis 5, **dadurch gekennzeichnet, dass** der Kommunikationspartner (300) ein Tablet-PC oder ein Smartphone ist.

7. Haushaltsgeräteanordnung, **dadurch gekennzeichnet, dass** die Haushaltsgeräteanordnung ein Haushaltsgerät (200-1, 200-2) nach einem der Ansprüche 1 bis 3 und einen Kommunikationspartner (100) nach einem der Ansprüche 4 bis 6 umfasst.

8. Verfahren zum Bedienen eines Haushaltsgerätes (200-1, 200-2), **dadurch gekennzeichnet, dass** das Verfahren die folgenden Schritte umfasst:
- Herstellen einer Verbindung zwischen dem Haushaltsgerät (200-1, 200-2) und einem Kommunikationspartner (300) mit Hilfe von Wi-Fi Protected Setup und unter Verwendung einer Einzeltaste des Haushaltsgeräts (200-1, 200-2) mittels Push Button Configuration;
- Abrufen einer Bedien- und Anzeigefunktion einer berührungsempfindlichen Anzeige des Kommunikationspartners (300) in Abhängigkeit einer von dem Haushaltsgerät empfangenen Identifikationsinformation in Form einer Seriennummer des Haushaltsgeräts (200-1, 200-2);
- Eingeben von Bedieninformation in den Kommunikationspartner (300) mit der berührungsempfindlichen Anzeige und
- drahtloses Senden der Bedieninformation an das Haushaltsgerät.

## Claims

1. Household appliance (200-1, 200-2) with a communications module (100) for a household appliance (200-1, 200-2), wherein the communications module (100) comprises a transmitting facility for wirelessly transmitting household appliance information to a communications partner (300) with a touch-sensitive display, wherein the communications module (100) is embodied, on request, to transmit an item of identification information of the household appliance (200-1, 200-2) in the form of a serial number of the household appliance (200-1, 200-2) to the communications partner (300),
**characterised in that**
the household appliance (200-1, 200-2) possesses an individual button (203) for manually operating the household appliance (200-1, 200-2) and, in the state on delivery, a standard setting with which the household appliance can be used to a limited extent without a communications partner (300),
wherein a connection between the household appliance and the communications partner (300) takes place with the aid of Wi-Fi Protected Setup and by using the individual button by means of Push Button Configuration.

2. Household appliance (200-1, 200-2) according to claim 1, **characterised in that** the communications module (100) comprises a receiving facility for wirelessly receiving operating information input via a touch-sensitive display from the communications partner (300).

3. Household appliance (200-1, 200-2) according to one of the preceding claims, **characterised in that** the communications module (100) is embodied to transmit control commands for the touch-sensitive display of the communications partner (300).

4. Communications partner (300) for wirelessly operating a household appliance (200-1, 200-2) according to one of the preceding claims, **characterised in that** the communications partner (300) comprises a touch-sensitive display and is embodied for establishing a connection to the household appliance with the aid of Wi-Fi Protected Setup and Push Button Configuration, as well as for retrieving an item of identification information of the household appliance (200-1, 200-2) in the form of a serial number of the household appliance (200-1, 200-2) and, as a function of the received identification information, to retrieve and provide an operating and display function of the touch-sensitive display from an external source, so that the communications partner (300) can operate a plurality of different household appliances.

5. Communications partner (300) according to claim 4, **characterised in that** the communications partner (300) comprises a software operating facility for operating the household appliance via the communications partner (300).

6. Communications partner (300) according to one of claims 4 to 5, **characterised in that** the communications partner (300) is a tablet PC or a smartphone.

7. Household appliance arrangement, **characterised in that** the household appliance arrangement comprises a household appliance (200-1, 200-2) according to one of claims 1 to 3 and a communications partner (100) according to one of claims 4 to 6.

8. Method for operating a household appliance (200-1, 200-2), **characterised in that** the method comprises the following steps:
- establishing a connection between the household appliance (200-1, 200-2) and a communications partner (300) with the aid of Wi-Fi Protected Setup and by using an individual button of the household appliance (200-1, 200-2) by means of Push Button Configuration;
- retrieving an operating and display function of a touch-sensitive display of the communications partner (300) as a function of an item of identification information received from the household appliance in the form of a serial number of the household appliance (200-1, 200-2);
- entering operating information into the communications partner (300) using the touch-sensitive display and
- wirelessly transmitting the operating information to the household appliance.

## Revendications

1. Appareil ménager (200-1, 200-2) doté d'un module de communication (100) pour appareil ménager (200-1, 200-2), dans lequel le module de communication (100) comprend un moyen d'envoi pour envoyer sans fil des informations sur l'appareil ménager à un partenaire de communication (300) comportant un affichage tactile, et dans lequel le module de communication (300) est configuré pour envoyer sur demande des informations d'identification de l'appareil ménager (200-1, 200-2) sous forme d'un numéro de série de l'appareil ménager (200-1, 200-2) au partenaire de communication (300),
**caractérisé en ce que** l'appareil ménager (200-1, 200-2) possède une touche individuelle (203) de commande manuelle de l'appareil ménager (200-1, 200-2) et un réglage standard à l'état à la livraison avec lesquels l'appareil ménager peut être utilisé de façon restreinte sans partenaire de communication (300),
dans lequel une liaison entre l'appareil ménager et le partenaire de communication (300) est effectuée au moyen d'un protocole WiFi sécurisé et en utilisant la touche individuelle au moyen de la configuration de bouton poussoir.

2. Appareil ménager (200-1, 200-2) selon la revendication 1, **caractérisé en ce que** le module de communication (100) comprend un moyen de réception permettant une réception sans fil d'informations de commande entrées sur un affichage tactile depuis le partenaire de communication (300).

3. Appareil ménager (200-1, 200-2) selon l'une des revendications précédentes, **caractérisé en ce que** le module de communication (100) est configuré pour envoyer des ordres de commande pour l'affichage tactile du partenaire de communication (300).

4. Partenaire de communication (300) permettant une commande sans fil d'un appareil ménager (200-1, 200-2) selon l'une des revendications précédentes, **caractérisé en ce que** le partenaire de communication (300) comprend un affichage tactile et est configuré pour produire une liaison avec l'appareil ménager au moyen d'un protocole WiFi sécurisé et d'une configuration de bouton poussoir, pour appeler des informations d'identification de l'appareil ménager (200-1, 200-2) sous forme d'un numéro de série de l'appareil ménager (200-1, 200-2) et pour appeler et fournir, en fonction des informations d'identification reçues, une fonction de commande et d'affichage de l'affichage tactile depuis une source externe, de telle sorte que le partenaire de communication (300) puisse commander plusieurs appareils ménagers différents.

5. Partenaire de communication (300) selon la revendication 4, **caractérisé en ce que** le partenaire de communication (300) comprend un moyen de commande par logiciel destiné à commander l'appareil ménager via le partenaire de communication (300).

6. Partenaire de communication (300) selon l'une des revendications 4 à 5, **caractérisé en ce que** le partenaire de communication (300) est une tablette PC ou un smartphone.

7. Agencement d'appareil ménager, **caractérisé en ce que** l'agencement d'appareil ménager comprend un appareil ménager (200-1, 200-2) selon l'une des revendications 1 à 3 et un partenaire de communication (100) selon l'une des revendications 4 à 6.

8. Procédé de commande d'un appareil ménager (200-1, 200-2), **caractérisé en ce que** le procédé comprend les étapes suivantes :
- production d'une liaison entre l'appareil ménager (200-1, 200-2) et un partenaire de communication (300) au moyen d'un protocole WiFi sécurisé et en utilisant une touche individuelle de l'appareil ménager (200-1, 200-2) au moyen de la configuration de bouton poussoir,
- appel d'une fonction de commande et d'affichage d'un affichage tactile du partenaire de communication (300) en fonction des informations d'identification reçues de l'appareil ménager sous forme d'un numéro de série de l'appareil ménager (200-1, 200-2),
- saisie d'informations de commande dans le partenaire de communication (300) au moyen de l'affichage tactile et
- envoi sans fil d'informations de commande à l'appareil ménager.
